# EUROPEAN PATENT APPLICATION

(11) **EP 4 451 641 A1**
(43) Date of publication of application: **23.10.2024**
(21) Application number: 23305601.9
(22) Date of filing: 18.04.2023
(51) Int. Cl.: H04L 61/00

(54) **COMMUNICATION APPARATUS**

(71) Applicant: Aginode Group, 75001 Paris (FR)
(72) Inventor: PÖSKEN, Holger, 40489 DÜSSELDORF (DE); MIDDELDORF, Jan, 47918 TÖNISVORST (DE)
(74) Representative: Ipsilon

(57) **Abstract**

A communication apparatus (200) comprising a switch (201) having a form factor adapted to the housing, for instance a cable duct. The switch is provided with at least one uplink port configured to realize a fiber optic connection to a communication network. The switch (201) has a given number of user accessible downlink ports (108) each enabling connecting a user device. The communication apparatus further comprises an expansion module (202) that is arranged separately from the switch in the housing and connected to the switch with a connection cable (204). The expansion module (202) provides additional user accessible downlink ports (108) each enabling connecting user devices.

## Description

### Field

The present disclosure relates to a communication apparatus mounted in a housing, for instance a cable duct, and providing a plurality of user ports.

### Background

In modern office buildings with many offices the number of applications running on user devices requiring connection to a communication network of the building increases continuously. Applications like IP telephony, cloud computing, and - last but not least - videoconferencing drive bandwidth requirements. For this reason, a scalable communication infrastructure is needed to ensure the network performance required presently and in the future. Fiber-optic cables are a preferred solution under these aspects rather than relying on older copper wiring. Laying fiber optic cables directly within an office building or the campus of a property is also denominated as "fiber to the office (FTTO)".

An FTTO installation provides significantly faster Internet speeds than traditional copper wire-based networks because fiber-optic cables can transmit data at much higher speeds and over longer distances than copper wires. At the same time, fiber-optic cables are more reliable than copper cables. More importantly, FTTO networks can be easily scaled up to accommodate increased demand for bandwidth as described above. Overall, FTTO provides businesses with faster, more reliable, and secure Internet connectivity. Obviously, in the offices it is necessary to link a plurality of user devices to an uplink network connected with the Internet. To that end, FTTO switches come into play that connect the optical fiber with several Ethernet connections that can also provide power over ethernet (PoE), if needed. Wherever possible, the necessary cabling for the communication network is installed in cable ducts fixed to walls or hidden in a floor of the building. The users are offered conveniently accessible ethernet plugs to physically access the Internet network.

A typical FTTO switch that can be mounted in a cable duct has a specific formfactor of 45x90mm. This formfactor is based on the so-called Mosaic^{™} format that is very well-known in the electric industry. Similar to the communication cables, FTTO switches are usually installed in cable ducts or floor boxes in the same way as power sockets. Until today, such FTTO switches offer up to eight Ethernet ports. However, only four user ports accessible at the front and the remaining two to four ports (known as uplink ports) are hidden in the cable duct and are not directly accessible. At least one of the uplink ports is designed as SFP ("small form-factor pluggable") port to realize a fiber optic connection. Thus, in a typical FTTO installation, with one fiber connection four user ports can be realized.

SFP devices are hot-swappable interfaces used primarily in network and storage switches. The SFP ports on a switch and SFP modules enable the switch to connect to fiber and Ethernet cables of different types and speeds.

To date, the only technical solution to meet the need for more user ports in some areas of an FTTO network is to add and install a second FTTO switch. However, a second FTTO switch is expensive, requires an uplink connection and its own power supply. In addition, the new FTTO switch must be integrated into the network management platform, requires an IP address and a minimum level of configuration, which is time-consuming and, therefore, adds to the costs. As a result, adding a second FTTO switch is not a plug-and-play process and incurs additional costs and expenses for network management.

In networks with industrial ethernet switches a need for more user ports can be met in some cases by employing so-called expansion modules, which are mechanically and communicatively connected with the ethernet switch in a direct manner. I.e. the expansion module is docked onto a corresponding interface on the housing of the ethernet switch (housing-to-housing connection). The expansion module functions essentially as an extension of the interface of the ethernet switch providing additional user ports. However, existing industrial Ethernet switches, offering the option of attaching an expansion module, are not usable for FTTO installations, because industrial Ethernet switches are designed for industrial applications and DIN-rail installations like in electrical cabinets. Furthermore, the configuration of an industrial ethernet switch with a directly connected expansion module is not flexible enough for FTTO networks where the expansion module must be a split installation to be compatible with the cable duct. I.e. an FTTO switch combined with an expansion module attached to the FTTO switch by means of a housing to housing connection simply does not fit into the cable duct. Finally, in FTTO networks the flexibility of having multiple port setup or bandwidth options offered by industrial ethernet switches are not necessary. Consequently, utilizing industrial Ethernet switches inherently includes offering these options increases costs without providing added value to an FTTO network installation.

In view of the limitations of existing ethernet switches there remains a desire for a communication apparatus to overcome or at least improve one or more of the problems mentioned at the outset.

### Summary

The present disclosure suggests a communication apparatus mounted in a housing. The communication apparatus comprises a switch having a form factor adapted to the housing. The switch is provided with at least one uplink port configured to realize a fiber optic connection to a communication network. Furthermore, the switch is provided with a given number of user accessible downlink ports each enabling connecting a user device. The communication apparatus further comprises an expansion module that is arranged separately from the switch in the housing and connected to the switch with a connection cable. The expansion module provides for additional user accessible downlink ports each enabling connecting a user device.

The proposed communication apparatus allows for offering more user ports with a single switch, in particular a single FTTO switch. The communication apparatus consists of two main components, namely a switch and a corresponding expansion module. With this combination it is possible to offer a modular concept with additional user ports. For instance, in a specific embodiment more than eight ports per FTTO switch in total are offered including two to three uplink ports, four user accessible ports with the FTTO switch and typically up to four additional user ports on the expansion module. The expansion module is connected to the switch with a connection cable to provide data and power to the expansion module.

Compared with the prior solution involving adding a second FTTO switch, the main difference is that the expansion module is much more simple and thus less expensive than a second FTTO switch. It can be simply connected with the main FTTO switch without any additional uplink to the core network and, in some embodiments, without a separate power supply cable. No additional configuration or IP address management is needed for the expansion module. The additional ports provided by the expansion module are shown directly in the main switch including its configuration.

The connection between the FTTO switch and the expansion module is flexible and based on the connection cable. The connection cable can be fixedly mounted on the expansion module, or it can be designed as a pluggable connection on both devices. This cable connection allows a much more flexible installation and positioning of the switch and the expansion module compared to industrial Ethernet switches with an extension module where both components are fixed together by a housing-to-housing connection.

In a specific embodiment the connection between switch and the expansion module is a very simple connection providing typically up to four Gigabit Ethernet RJ45 ports to the expansion module. It is however noted that the present disclosure is not limited to an expansion module providing a specific number of user ports. The expansion module can be seen as a simple cable extension to provide additional ports. There is no additional switching chipset or processor operating a firmware in the expansion module.

The proposed communication apparatus is a cost-efficient and flexible solution for providing connectivity in workplaces, especially when the workplace is equipped with a broadband communication network access such as a fiber to the office (FTTO) network. The expansion module allows for fully using the capacity of the switch with little additional hardware. The expansion module, therefore, consumes little power that can readily be supplied by the power supply of the switch and transferred via the connection cable connecting the switch with the expansion module. Consequently, no additional power supply and corresponding power cabling is required to supply the expansion module. The connection cable also provides flexibility regarding the positioning of the additional user accessible downlink ports. I.e. the ports can be arranged in the workplace where necessary. In this way lose ethernet cables on desks and floors can be avoided. The expansion module can be installed without any additional uplink connection to the communication network or power supply. The expansion module is a plug and play solution without requiring additional programming during installation. This allows a more flexible and handy installation compared with a fixed connection as known from the industrial Ethernet switches. Especially in cable duct installation a fixed mounted expansion module would result in a size of 180x45mm which is unhandy and too fragile for this kind of installation. Furthermore, the installation of the expansion module can be performed while the FTTO switch is already in place. Finally, it is a cost-efficient solution using all ports made available by the switching chip in the FTTO switch with as few additional components as possible in the expansion module.

In an advantageous embodiment the connection cable is connected to a pluggable interface of the switch. Hence, the connection cable does not use one of the available user accessible downlink ports on the switch.

In this case the expansion module is preferably provided with a corresponding interface accepting the connection cable. The interfaces of the switch and the expansion module accepting the connection cable enable a plug-and-play solution for providing additional downlink ports.

Advantageously, the housing accommodating the switch and the expansion module is a cable duct, a communication pillar, or a floor box. The form factors of the switch and the expansion module are chosen such that conventional cable ducts etc. can be used to install the communication apparatus in workplaces.

With advantage the communication apparatus comprises a power supply providing the switch and the expansion module with power. A single power supply is cost-efficient and at the same time it saves installation space. Saving installation space is particularly important when the communication apparatus is mounted in a cable duct or a similar housing.

In some applications, especially applications implementing power over ethernet functionality, it has been found useful to directly connect the power supply or a second, sperate one to the expansion module.

In a further advantageous embodiment, the downlink ports of the expansion module are accessible from the front side of the housing. This embodiment enhances the usability of the communication apparatus because it facilitates connecting user devices to the network.

In one embodiment the communication network is a local or wide area network (LAN, WAN), in particular the Internet.

### Brief description of the drawings

Exemplary embodiments of the present disclosure are illustrated in the drawings and are explained in more detail in the following description. In the figures, the same or similar elements are referenced with the same or similar reference signs. It shows:
- Fig. 1: a conventional set up for increasing the number of user accessible downlink ports in a communication network;
- Fig. 2A: a communication apparatus according to the present disclosure;
- Fig. 2B: the communication apparatus of Figure 2A mounted in a cable duct; and
- Figs. 3A-3C: schematic diagrams of different options for supplying the communication apparatus with electrical power.

### Detailed description

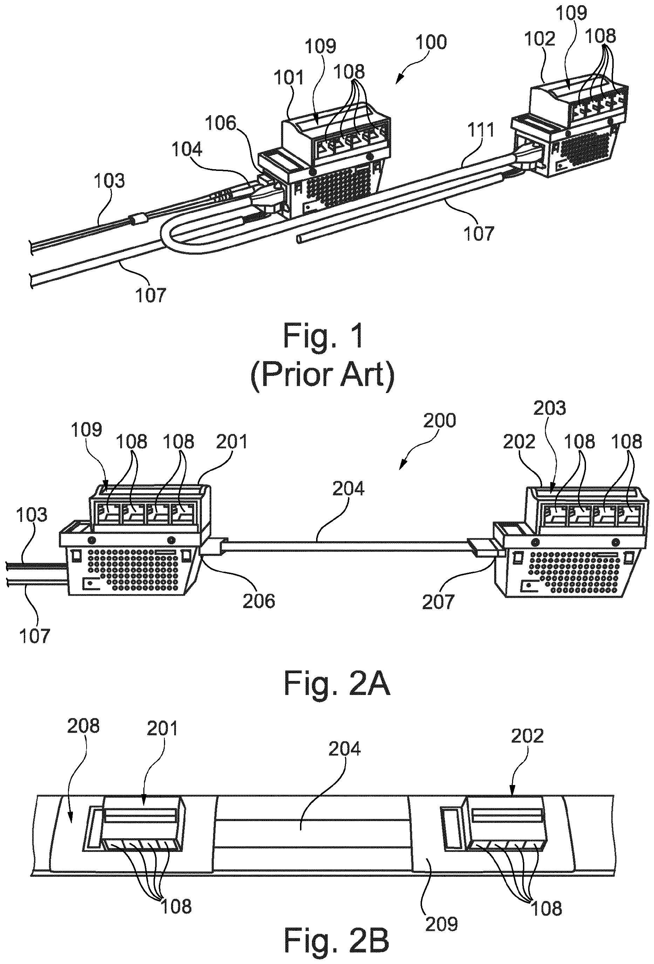

Figure 1 shows a conventional communication device 100 comprising a first switch 101 and a second switch 102 that are installed in a cable duct, which is not shown in Figure 1 for the sake of clarity and simplicity. In the shown embodiment the first and second switches 101, 102 are FTTO switches that have a form factor corresponding to the Mosaic ^{™} format. Specifically, the form factor is 45×90 mm. However, it is noted that the present disclosure is not limited to any specific form factor.

The first switch 101 is connected with a fiber optic cable 103 provided with an SFP plug 104 plugged into an uplink port 106 of the first switch 101. A power supply (not shown in Figure 1) provides power to the electronic circuitry of the first switch 101 via the power cable 107 connected to corresponding contacts at the first switch 101. The first switch 101 comprises four downlink ports 108 on a front face 109 of the first switch 101. Additional downlink ports not visible in Figure 1 are arranged on the rear face of the first switch 101. The downlink ports 108 are also referred to as user ports enabling users to connect user devices such as a computer, printer, telephone etc. to a communication network. The first switch 101 is mounted in the cable duct such that the downlink ports 108 are accessible by a user. Thus, the user can plug in Ethernet cables into any one of the four downlink ports 108 to connect to the user device (not shown in Figure 1) with the network.

Frequently, users need more than four downlink ports at their workplace. To meet this need, the communication device 100 comprises a second switch 102, which is identical or similar to the first switch 101 and, thus, provides four user accessible downlink ports 108. The second switch 102 is communicatively connected by a cascading cable 111 plugged into an uplink port at the first switch 101 and the second switch 102, respectively. The cascading cable 111 provides for an uplink connection for the second switch 102. The second switch 102 is connected by a power cable 107 to its own dedicated power supply (not shown in Figure 1). In addition to that, the second switch 102 is integrated into network management platform, which provides an IP address and a minimum of configuration.

Figure 2A displays a communication apparatus 200 according to the present disclosure. The communication apparatus 200 comprises a switch 201, which is similar to the first switch 101 of the communication device 100. A fiber optical cable 103 is connected to an uplink port of the switch 201. The power cable 107 is connected to corresponding contacts of the switch 201 providing power from a power supply (not shown) to the switch 201. The switch 201 comprises typically four user accessible downlink ports 108 at a front face 109 of the switch 201. In other embodiments the switch 201 has less or more than four user accessible downlink ports 108. Furthermore, the communication apparatus 200 comprises an expansion module 202. The expansion module 202 has a form factor that is compatible with the form factor of the switch 201 in the sense that the switch 201 and the expansion module 202 can be mounted in the same housing, for instance a cable duct or the like. The expansion module 202 provides typically four downlink ports 108 at a front face 203. In other embodiments the expansion module 202 has less or more than four user accessible downlink ports 108. The downlink ports 108 of the expansion module 202 are accessible for a user in the same way then the downlink ports 108 of the switch 201. However, the expansion module 202 does not provide switching capabilities but rather utilizes the resources of the switch 201. To this end, a connection cable 204 connects the switch 201 with the expansion module 202. On the side of the switch 201, the connection cable 204 is plugged into an interface 206 of the switch 201. The expansion module 202 is provided with a corresponding interface 207 accepting the connection cable 204.

Most of the electronic circuitry present in the switch 201 is not included in the expansion module 202, which, therefore, consumes significantly less power than the switch 201 and the power supply providing power to the switch 201 is sufficient to supply power also to the expansion module 202 via the connection cable 204. The expansion module has no dedicated uplink connection and, thus, has also no IP address. Therefore, the expansion module 202 does not need to be integrated in the network management platform. In short, compared with a switch, the expansion module 202 is a simple component and less costly than a switch. The expansion module 202 cannot operate as a stand-alone FTTO switch, it can only be used in combination with an FTTO switch 201. On the other hand, the expansion module 202 can be integrated into existing installations simply by connecting the expansion module 202 to the closest switch 201 provided the switch 201 is equipped with an interface 206.

Figure 2B illustrates the communication apparatus 200 when it is installed in a cable duct 208. A cover 209 of the cable channel 208 is cut away between the switch 201 and the expansion module 202, revealing the connection cable 204.

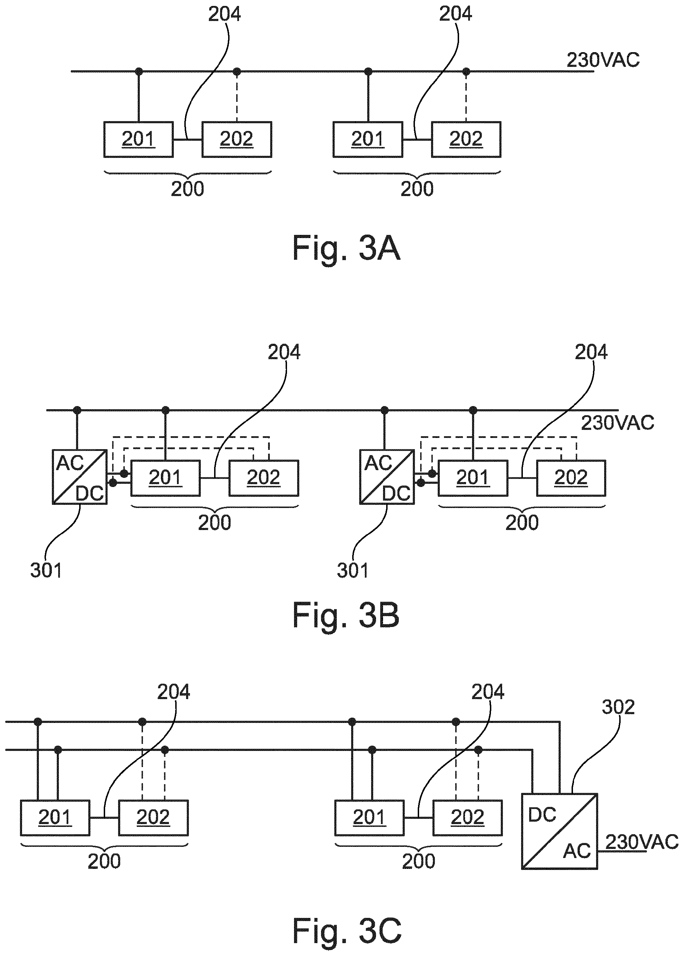

Figures 3A to 3C schematically illustrates how the communication apparatus 200 is supplied with power.

Figure 3A shows a configuration in which the switch 201 is supplied with 230 V AC power to supply an integrated power supply in the switch 201 which generates DC voltages to supply the electronic circuits in the switch 201 and the expansion module 202. In one embodiment the expansion module 202 is provided with power via the connection cable 204. Alternatively or in addition to that, the expansion module 202 is directly connected to the 230 V AC supply voltage (as shown with dashed lines in Figure 3A) to supply an integrated power supply in the expansion module 202 which generates DC voltages to supply the electronic circuits in the expansion module 202. In all cases, the set-up shown in Figure 3A does not provide PoE (Power over Ethernet) on any downlink ports.

Figure 3B displays an alternative configuration with individual power supplies 209 for each switch 201. In one embodiment the expansion module 202 is provided with power via the connection cable 204. Alternatively or in addition to that, the expansion module 202 is directly connected to the power supply 301 as it is shown with dashed lines in Figure 3B. The individual AC/DC power supplies 301 are required to provide PoE (Power over Ethernet) capabilities.

Finally, Figure 3C exhibits a centralized power supply 302 which supplies several switches 201 being part of an installation. In one embodiment the expansion module 202 is provided with power via the connection cable 204. Alternatively or in addition to that, the expansion module 202 is directly connected to the power supply 302 as it is shown with dashed lines in Figure 3C.

Individual components or functionalities of the present invention are described in the embodiment examples as software or hardware solutions. However, this does not mean that a functionality described as a software solution cannot also be implemented in hard-ware and vice versa. Similarly, mixed solutions are also conceivable for a person skilled in the art, in which components and functionalities are simultaneously partially realized in software and hardware.

In the claims, the word "comprising" does not exclude other elements or steps, and the indefinite article "a" does not exclude a plurality.

A single unit or device may perform the functions of multiple elements recited in the claims. The fact that individual functions and elements are recited in different dependent claims does not mean that a combination of those functions and elements could not advantageously be used.

### List of reference signs

- 100: Communication device
- 101: first switch
- 102: second switch
- 103: Fiber optic cable
- 104: SFP plug

- 106: Uplink port
- 107: Power cable
- 108: Downlink ports
- 109: Front face

- 200: Communication apparatus
- 201: FTTO switch
- 202: Expansion module
- 203: Front face
- 204: Connection cable

- 206: Interface
- 207: Interface
- 208: Cable duct
- 209: Cover

- 301: Power supply
- 302: Power supply

## Claims

1. Communication apparatus mounted in a housing comprising a switch (201) having a form factor adapted to the housing, wherein the switch (201) is provided with at least one uplink port (106) configured to realize a fiber optic connection (103) to a communication network and with a given number of user accessible downlink ports (108) each enabling connecting a user device to the communication network **characterized in that**
the communication apparatus further comprises an expansion module (202) that is arranged separately from the switch (201) in the housing and connected to the switch with a connection cable (204), and **in that**
the expansion module (202) provides for additional user accessible downlink ports (108).

2. Communication apparatus according to claim 1, wherein the connection cable (204) is connected to a pluggable interface (206) of the switch.

3. Communication apparatus according to claim 2, wherein the expansion module (202) is provided with a corresponding interface (207) accepting the connection cable.

4. Communication apparatus according to any one of the preceding claims, wherein the housing accommodating the switch (201) and the expansion module (202) is a cable duct, a communication pillar, or a floor box.

5. Communication apparatus according to any one of the preceding claims, wherein the communication apparatus comprises a power supply (301,302) providing the switch (201) and the expansion module (202) with power.

6. Communication apparatus according to claim 5, wherein the power supply (301,302) is directly connected to the expansion module (202).

7. Communication apparatus according to any one of the preceding claims, wherein the downlink ports (108) of the expansion module (202) are accessible from the front side of the housing.

8. Communication apparatus according to any one of the preceding claims, wherein the communication network is a local or wide area network (LAN, WAN), in particular the Internet
